(19) Europäisches Patentamt
European Patent Office
Office européen des brevets

(11) **EP 0 726 445 A2**

(12) **EUROPÄISCHE PATENTANMELDUNG**

(43) Veröffentlichungstag:
14.08.1996 Patentblatt 1996/33

(51) Int. Cl.$^6$: **G01B 11/00**, G01B 17/00

(21) Anmeldenummer: 96250013.8

(22) Anmeldetag: 19.01.1996

(84) Benannte Vertragsstaaten:
**AT DE DK FR GB IT NL**

(30) Priorität: **10.02.1995 DE 19505509**

(71) Anmelder: **MANNESMANN Aktiengesellschaft**
**D-40213 Düsseldorf (DE)**

(72) Erfinder: **Hoene, Albrecht, Dr.-Ing.**
**D-63322 Rödermark (DE)**

(74) Vertreter: **Presting, Hans-Joachim, Dipl.-Ing. et al**
**Meissner & Meissner**
**Patentanwaltsbüro**
**Hohenzollerndamm 89**
**14199 Berlin (DE)**

(54) **Verfahren und Einrichtung zum Messen des Volumens eines bewegten Fördergutes**

(57) Bei einem Verfahren zum Messen des Volumens eines bewegten Fördergutes (2), insbesondere von Breite (b) und Höhe (h) eines Fördergutstückes, wird mittels Meßstrahlen in zumindest zwei Meßrichtungen abgetastet, wobei deren Meßergebnisse zur Berechnung der Volumengröße eingesetzt werden.

Um eine vom Fördergut unabhängige berührungsfreie Messung durchführen zu können, wird vorgeschlagen, daß jeweils von einer Bezugsstelle (4) aus der Abstand zum Fördergut (2) in der Weise gemessen wird, daß zumindest mit einem ersten Abstandssensor (S1) parallel zur Fördermediumebene (5) und mit zumindest einem zweiten Abstandssensor (S2) vertikal zur Fördermediumebene (5) der Abstand zwischen der Bezugsstelle (4) und der jeweiligen Fördergutoberfläche (2a) gemessen wird, wobei das Fördergut (2) durch mechanische Maßnahmen auf einen vorherbestimmten Bewegungslinie gehalten oder durch Messungen eine Bewegungslinie ermittelt wird.

Fig.1B

EP 0 726 445 A2

# Beschreibung

Die Erfindung betrifft ein Verfahren und eine Einrichtung zum Messen des Volumens eines bewegten Fördergutes, insbesondere von Breite und Höhe eines Fördergutstückes, durch Abtasten mittels Strahlen in zumindest zwei Meßrichtungen, deren Meßergebnisse zur Berechnung der Volumengröße eingesetzt werden.

Bekannte und für die Fördertechnik anwendbare Verfahren zum Messen des Volumens eines bewegten Fördergutes bestehen zumeist aus einem Meßrahmen mit einem "Lichtschrankenmeßgitter". In diesem Lichtschrankenmeßgitter sind eine Vielzahl von Lichtschranken zum einen horizontal und senkrecht zur Förderrichtung und zum anderen vertikal ebenfalls senkrecht zur Förderrichtung angeordnet. Bedämpfte Lichtschranken horizontal, senkrecht zur Förderrichtung, ergeben die Höhe des Fördergutes, aus den vertikalen Lichtschranken wird die Breite des Fördergutes ermittelt. Die Länge des Fördergutes wird aus der Dauer der Lichtschrankendämpfung und der Fördergeschwindigkeit berechnet.

Für landwirtschaftliche Produkte ist bereits eine Sortiervorrichtung für Bohnen aufgrund eines optischen Sensors vorgeschlagen worden (DE 27 22 368.). Die Einrichtung umfaßt einen Durchgang, durch den die zu sortierenden Gegenstände hindurchgeführt werden unter Verwendung eines Beleuchtungssystems, das mit dem Durchgang verbunden ist, um eine kleine gleichmäßig geformte Lichtschicht zu erzeugen, die sich senkrecht zu dem Durchgang erstreckt und einen Lichtempfänger besitzt, der ebenfalls mit dem Durchgang verbunden ist, wodurch auf dem Licht beruhende Signale erzeugt werden, die von den Gegenständen reflektiert werden, die durch diese Lichtschicht laufen. Der Lichtempfänger empfängt ungerichtetes reflektiertes Licht und ist in der Lage, Licht von zwei unterschiedlichen Bandbreiten des Lichtspektrums zu messen. Beide Lichtbänder liegen innerhalb des sichtbaren oder infraroten Teils des Spektrums.

Immer häufiger wird die Anforderung gestellt, das Volumen von Fördergut bei einer hohen Durchsatzrate, d.h. großer Fördergeschwindigkeit, zu messen. In vielen Anwendungsfällen ist für den Betreiber von Bedeutung, das Volumen zu messen, da die Anwender ihre Gebühren u.a. nach Frachtvolumen abrechnen müssen.

Der vorliegenden Erfindung liegt daher die Aufgabe zugrunde, ein Verfahren und eine Einrichtung zum Messen des Volumens eines bewegten Fördergutes vorzuschlagen, bei dem ein geringer verfahrenstechnischer bzw. einrichtungstechnischer Aufwand zu betreiben ist und dennoch eine ausreichend genaue Meßwertermittlung bzw. Berechnung des Volumens stattfinden können.

Die gestellte Aufgabe wird erfindungsgemäß dadurch gelöst, daß jeweils von einer Bezugsstelle aus der Abstand zum Fördergut in der Weise gemessen wird, daß zumindest mit einem ersten Abstandssensor parallel zur Förderebene und zumindest mit einem zweiten Abstandssensor vertikal zur Förderebene der Abstand zwischen der Bezugsstelle und der jeweiligen Fördergutoberfläche gemessen wird, wobei das Fördergut durch mechanische Maßnahmen auf einer vorherbestimmten Bewegungslinie gehalten wird oder durch Messungen eine Bewegungslinie ermittelt wird. Zunächst kommt dieses Verfahren mit zwei Meßwerten aus, wobei Meßprinzipien, wie optische, akustische, kapazitive, induktive Wegmessungen u.dgl. zum Einsatz kommen können.

Nach weiteren Merkmalen ist vorgesehen, daß aus der zeitlichen Länge der Signale des ersten und/oder des zweiten Abstandssensors die zugehörige Länge des Fördergutes bestimmt wird.

Alternativ ist jedoch auch möglich, daß die Länge des Fördergutes durch ein das Fördergut an mehreren Seiten umgebendes Lichtschrankensystem und die damit verbundene Dämpfung der Meßstrahlen gemessen wird.

Sofern das zu messende Fördergut nicht ausreichend genau auf der ermittelten Bewegungslinie gehalten werden kann, so daß ein Schrägliegen o.ä. stattfindet, wird vorgeschlagen, daß der Abstand parallel zur Fördermediumebene durch den zweiten Abstandssensor und einen dritten Abstandssensor gemessen wird, wobei der zweite und dritte Abstandssensor gegeneinander gerichtet arbeiten. In diesem Fall ist auch möglich, bei von einer gewollten Bezugslinie abweichenden Bewegung das Fördervolumen zu messen.

Andererseits ist sehr vorteilhaft, wenn das Fördergut durch mechanische Maßnahmen plan an der einen Seite der Fördererbegrenzung während der Meßdauer gehalten wird. In diesem Fall bestehen keinerlei Probleme, die entsprechenden Messungen durchzuführen.

In dieser Hinsicht ist außerdem vorteilhaft, daß bei schräg auf dem Fördermedium liegendem Fördergut durch eine kombinierte Auswertung von zumindest zwei antiparallel zur Fördererebene und einem vertikal auf das Fördergut bzw. die Fördermediumebene gerichteten Meßstrahl aus den drei Meßsignalen eine Volumenauswertung vorgenommen wird.

Eine Einrichtung zur Messung des Volumens eines bewegten Fördergutes, insbesondere von Breite und Höhe eines Fördergutstückes, durch Abtastung mittels Meßstrahlen in zumindest zwei Meßrichtungen, wobei die Meßergebnisse zur Berechnung der Volumengröße verwertbar sind, wird vorteilhafterweise dadurch geschaffen, daß außerhalb eines Fördermediums in einer Meßentfernung berührungslos arbeitende Abstandssensoren angeordnet sind, daß deren Meßstrahl quer zur Förderrichtung über der Fördermediumebene entsprechend dem niedrigsten Fördergut ausgerichtet ist und daß ein etwa vertikal verlaufender Meßstrahl entweder etwa mittig zum Förderer oder aber nahe zu einer Fördererbegrenzung verlaufend ausgerichtet ist. Die gesamte Meßeinrichtung kommt demzufolge mit zwei Abstandssensoren aus, wobei einer horizontal quer zur Förderrichtung, der andere vertikal arbeitet.

Nach weiteren Merkmalen der Erfindung ist vorgesehen, daß die Abstandssensoren aus optischen Sensoren oder aus Ultraschallsensoren gebildet sind.

Weitere Vorteile ergeben sich dadurch, daß die optischen Abstandssensoren mit Schaltungen nach dem Prinzip der Triangulation, der Lichtstreuung, der Phasenverschiebung oder einem Laufzeitverfahren eingesetzt sind.

Für den Einsatz von Ultraschall-Sensoren ist vorgesehen, daß die Abstandssensoren mit Schaltungen nach dem Prinzip des Echolots oder des Sonars ausgeführt sind.

Ausführungsbeispiele der Erfindung sind in der Zeichnung dargestellt und werden im folgenden näher beschrieben. Es zeigen

Fig. 1 A     einen Querschnitt durch ein Fördermedium mit Abstandssensoren,

Fig. 1 B     die zu Fig. 1 A gehörende Draufsicht,

Fig. 2 A     einen Querschnitt durch das Fördermedium mit einer alternativen Meßlage des Fördergutes,

Fig. 2 B     die zu Fig. 2 A gehörende Draufsicht,

Fig. 3 A     denselben Querschnitt durch das Fördermedium für eine weitere alternative Meßmethode,

Fig. 3 B     die zu Fig. 3 A gehörende Draufsicht,

Fig. 4     ein Diagramm für den Zeitverlauf der Signale der Abstandssensoren S1, S2, S3 und

Fig. 5     ein Diagramm über die Geometrie des Fördergutes 2 und dessen Lage auf dem Fördermedium 1.

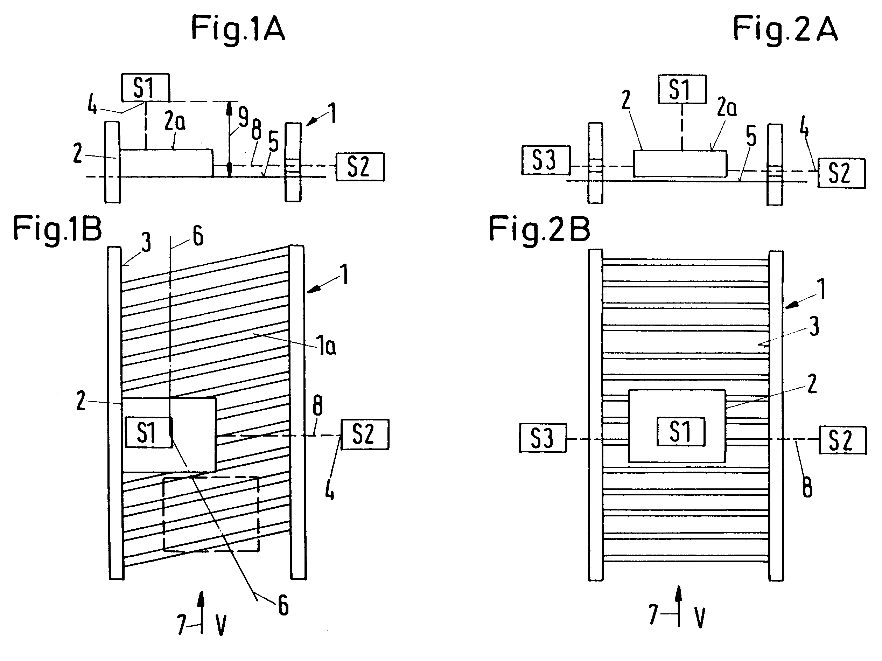

Gemäß Fig. 1 besteht ein Fördermedium 1 aus einem Schrägrollenförderer 1a, an dessen Stelle auch ein Gurtförderer mit schrägem Lineal, ein Hochkantförderer oder eine andere mechanische Führung, ein Pusher o.dgl. treten kann. Das Fördergut 2 wird durch die gewollte Förderkraftkomponente stets gegen eine Förderer-Begrenzung 3 gedrückt, so daß seine Lage konstant ist in bezug auf eine Bezugsstelle 4. Von dieser Bezugsstelle 4 aus wird der Abstand zum Fördergut 2 in der Weise gemessen, daß zumindest mit einem ersten Abstandssensor S1 vertikal zur Fördermediumebene 5 und mit einem zweiten Abstandssensor S2 parallel zur Fördermediumebene 5 der Abstand zwischen der Bezugsstelle 4 und der jeweiligen Fördergutoberfläche 2a gemessen wird, wobei das Fördergut 2 durch mechanische Maßnahmen auf einer vorherbestimmten oder durch Messungen ermittelten Bewegungslinie 6 gehalten wird. Die Messungen können auf mehreren Sensoren beruhen.

Das Fördergut 2 tritt ab einer bestimmten Stelle in den Meßbereich der Abstandssensoren S1 und S2 ein. Der Abstandssensor S1 ermittelt durch Vergleich mit dem Meßsignal bei nicht vorhandenem Fördergut 2 (entspricht der Meßentfernung 9 zum Fördermedium 1) die Höhe des Fördergutes 2; dementsprechend ermittelt der Abstandssensor S2 die Breite des Fördergutes 2.

Aus der zeitlichen Länge der entstehenden Signale bei S1 oder S2 und der Fördergeschwindigkeit kann sodann die Länge des Fördergutes 2 ermittelt werden.

Für den Ausnahmefall, daß die Abtastraten der Abstandssensoren S1 und S2 zu gering sind, kann die Aufgabe der Längenmessung auch einer herkömmlichen Lichtschranke übertragen werden, die zusätzlich parallel zum Abstandssensor S2 anzuordnen ist. Diese (nicht dargestellte) Lichtschranke wird kurz vor den Abstandssensoren S1 und S2 angebracht. Das Signal dieser Lichtschranke kann auch als Trigger für die Abstandssensoren S1 und S2 verwendet werden.

Die Länge des Fördergutes kann hingegen grundsätzlich auch durch ein das Fördergut 2 an mehreren Seiten umgebendes Lichtschrankensystem und die damit verbundene Dämpfung der Meßstrahlen gemessen werden, wobei auch von der Unterseite her gearbeitet bzw. gemessen werden kann.

Für die Anordnung des Abstandssensors S1 ist wichtig, daß dieser so weit wie möglich an die Begrenzung 3 (in den Fig. 1 A und 1 B nach links) montiert wird, wodurch auch die Höhe sehr schmalen Fördergutes 2 gemessen werden kann.

Auf die Funktion der Seitenbegrenzung 3 und eines Schrägrollenförderers 1a kann verzichtet werden, wenn der Abstand parallel zur Fördermediumebene 5 durch den zweiten Abstandssensor S2 und einen dritten Abstandssensor S3 gemessen wird, wobei der zweite Abstandssensor S2 und der dritte Abstandssensor S3 gegeneinander gerichtet arbeiten (Fig. 2 A und 2 B).

Der Schrägrollenförderer 1a stellt sicher, daß durch mechanische Maßnahmen das Fördergut 2 plan an der einen Seite der Förderer-Begrenzung 3 während seiner Bewegung gehalten wird.

Aus den Signalen der Abstandssensoren S2 und S3 und der bekannten geometrischen Anordnung der Abstandssensoren S2 und S3 berechnet sich ebenfalls die Breite des Fördergutes 2. Für die Berechnung des Fördergut-Volumens ist es bei der Anordnung gemäß den Fig. 2 A und 2 B nicht mehr notwendig, daß das Fördergut 2 bündig zu der Förderer-Begrenzung 3 transportiert wird, wohl aber muß das Fördergut 2 parallel zur Förderrichtung 7 ausgerichtet sein.

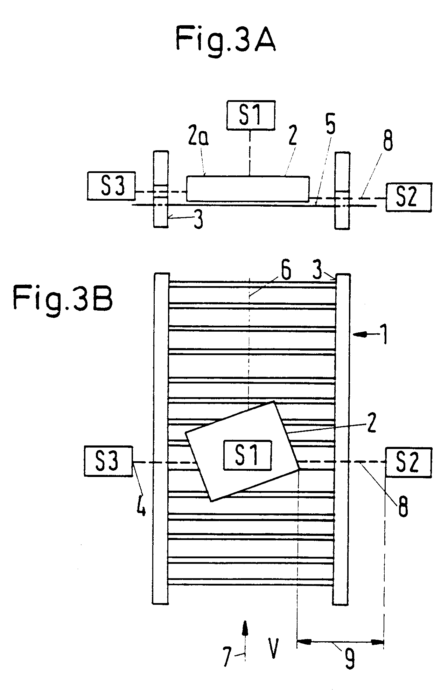

Bei schräg auf dem Fördermedium 1 liegendem Fördergut 2 (Fig. 3 A und 3 B) wird durch eine kombinierte Auswertung von zumindest zwei parallel zur Fördermediumebene 5 und einem vertikal auf das Fördergut 2 bzw. die Fördermediumebene gerichteten Meßstrahl 8 aus den drei Meßsignalen der Abstandssensoren S1, S2, S3 eine Volumenauswertung vorgenommen.

Die Abstandssensoren S1, S2 (S3) sind jeweil in einer Meßentfernung 9 berührungslos arbeitend angeordnet. Der Meßstrahl 8 ist jeweils quer zur Förderrichtung 7 über der Fördermediumebene 5 entsprechend dem niedrigsten Fördergut 2 ausgerichtet und ein etwa vertikal verlaufender Meßstrahl 8 ist entweder etwa mittig zum Fördermedium 1 oder aber nahe zu einer Fördererbegrenzung 3 verlaufend ausgerichtet.

Die Abstandssensoren S1, S2, S3 sind aus optischen Sensoren oder aus UltraschallSensoren gebildet. Die optischen Abstandssensoren S1, S2, S3 sind dabei mit Schaltungen nach dem Prinzip der Triangulation, der Lichtstreuung, der Phasenverschiebung oder einem Laufzeitverfahren einsetzbar. Die Abstandssensoren S1, S2, S3 können auch mit Schaltungen nach dem Prinzip des Echolots oder des Sonars ausgeführt sein.

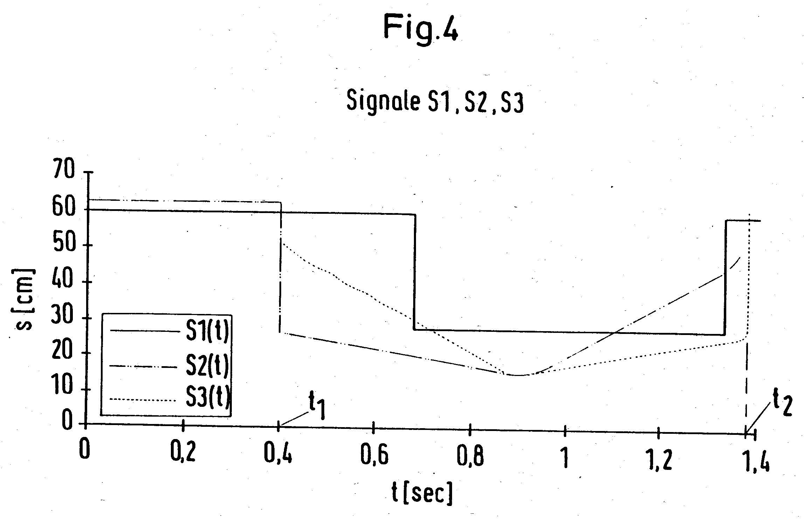

Bei schrägliegendem Fördergut 2 (entsprechend den Fig. 3 A und 3 B) kann eine geeignete Auswertung der Signale der Abstandssensoren S1, S2, S3 vorgenommen werden. Gemäß Fig. 4 ist ein möglicher Zeitverlauf der Signale der Abstandssensoren S1, S2, S3 bei schräg durchlaufendem Fördergut 2 dargestellt. Zum Zeitpunkt $t_1 = 0,4$ tritt das Fördergut 2 in den Meßbereich der Abstandssensoren S2 und S3. Zu diesem Zeitpunkt werden die Abstände zur vorderen Kante des Fördergutes 2 gemessen. Zu prinzipiell unterschiedlichen Zeitpunkten erreichen die Meßsignale der Abstandssensoren S2 und S3 ihr jeweiliges Minimum, d.h. zu diesen Zeitpunkten passieren die Kanten die Abstandssensoren S2 und S3. Die Signale der Abstandssensoren S2 und S3 steigen anschließend wieder an, bis das Fördergut 2 den Meßbereich der Abstandssensoren S2 und S3 verläßt. In diesem Moment $t_2$ springen die Signale der Abstandssensoren S2 und S3 sprungartig in ihre Ausgangsposition zurück.

Aus dem Verlauf der Signale der Abstandssensoren S1, S2 und S3 kann auf die Geometrie des Fördergutes 2 zurückgeschlossen werden. Bei bekannter Fördergeschwindigkeit v ergibt sich der zurückgelegte Weg

$$s(t) = \int_{\tau=t1}^{\tau=t} v(\tau)d\tau$$

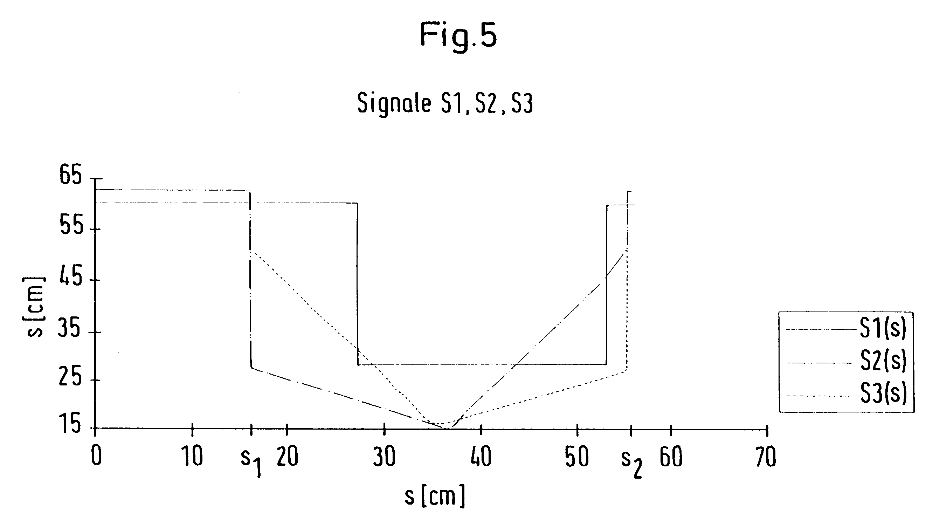

Wird die Zeitachse aus Fig. 4 entsprechend durch eine Wegachse ersetzt, so ergibt sich die Geometrie des Fördergutes 2 und dessen Lage auf dem Fördermedium 1 gemäß Fig. 5. Die Flächen (Fig. 5) unterhalb der Kurven S2 (s) und S3 (s) entsprechend den Flächen des Fördermediums 1, die bei der Vorbeifahrt an den Abstandssensoren S2 bzw. S3 vom Fördergut nicht abgedeckt wurden, sind:

$$A2 = \int_{s1}^{s2} S2(\kappa)d\kappa$$

$$A3 = \int_{s1}^{s2} S3(\kappa)d\kappa$$

Die Integrationsgrenzen entsprechen dem Beginn (s1) und dem Ende (s2) des Eintritts des Fördergutes 2 in den Meßbereich der Abstandssensoren S2 und S3 zu den Zeiten $t_1$ bzw. $t_2$.

Über die Breite b des Fördermediums 1 - sie entspricht prinzipiell jeweils dem Leersignal S2 bzw. S3 wenn kein Fördergut 2 sich im Meßbereich befindet - und den beiden Integrationsgrenzen s1 und s2 kann die Grundfläche A des Fördergutes 2 berechnet werden:

$$A = b \times (s_2 - s_1) - A2 - A3,$$

wobei bedeuten

b          = Breite des Fördermediums 1
A          = Grundfläche des Fördergutes 2
$s_1$          = Integrationsgrenze
$s_2$          = Integrationsgrenze

Die Berechnung der Grundfläche A setzt dabei nicht einen rechteckigen Querschnitt des Fördergutes 2 voraus. Das Volumen V ergibt sich durch Multiplikation der Grundfläche A mit der Höhe h, die vom Abstandssensor S1 geliefert wird.

$$V = A \times h$$

**Bezugszeichenliste**

1          Fördermedium
1a          Schrägrollenförderer
2          Fördergut
2a          Fördergutoberfläche
3          Förderer-Begrenzung
4          Bezugsstelle
5          Fördermediumebene
6          Bewegungslinie
S1          Abstandssensor
S2          Abstandssensor
S3          Abstandssensor
7          Förderrichtung
8          Meßstrahlen
9          Meßentfernung

**Patentansprüche**

1.  Verfahren zum Messen des Volumens eines bewegten Fördergutes, insbesondere von Breite und Höhe eines Fördergutstückes, durch Abtasten mittels Meßstrahlen in zumindest zwei Meßrichtungen, deren Meßergebnisse zur Berechnung der Volumengröße eingesetzt werden,
dadurch gekennzeichnet,
daß jeweils von einer Bezugsstelle aus der Abstand zum Fördergut in der Weise gemessen wird, daß zumindest mit einem ersten Abstandssensor parallel zur Fördermediumebene und zumindest mit einem zweiten Abstandssensor vertikal zur Fördermediumebene der Abstand zwischen der Bezugsstelle und der jeweiligen Fördergutoberfläche gemessen wird, wobei das Fördergut durch mechanische Maßnahmen auf einer vorherbestimmten Bewegungslinie gehalten wird oder durch Messungen eine Bewegungslinie ermittelt wird.

2. Verfahren nach Anspruch 1,
dadurch gekennzeichnet,
daß aus der zeitlichen Länge der Signale des ersten und/oder des zweiten Abstandssensors die zugehörige Länge des Fördergutes bestimmt wird.

3. Verfahren nach Anspruch 1,
dadurch gekennzeichnet,
daß die Länge des Fördergutes durch ein das Fördergut an mehreren Seiten umgebendes Lichtschrankensystem und die damit verbundene Dämpfung der Meßstrahlen gemessen wird.

4. Verfahren nach einem der Ansprüche 1 bis 3,
dadurch gekennzeichnet,
daß der Abstand parallel zur Fördermediumebene durch den zweiten Abstandssensor und einen dritten Abstandssensor gemessen wird, wobei der zweite und dritte Abstandssensor gegeneinandergerichtet arbeiten.

5. Verfahren nach einem der Anspruch 1 bis 3,
dadurch gekennzeichnet,
daß das Fördergut durch mechanische Maßnahmen plan an der einen Seite der Fördererbegrenzung während der Meßdauer gehalten wird.

6. Verfahren nach einem der Ansprüche 1 bis 5,
dadurch gekennzeichnet,
daß bei schräg auf dem Fördermedium liegendem Fördergut durch eine kombinierte Auswertung von zumindest zwei antiparallel zur Fördermediumebene und einem vertikal auf das Fördergut bzw. die Fördermediumebene gerichteten Meßstrahl aus den drei Meßsignalen eine Volumenauswertung vorgenommen wird.

7. Einrichtung zur Messung des Volumens eines bewegten Fördergutes, insbesondere von Breite und Höhe eines Fördergutstückes, durch Abtastung mittels Meßstrahlen in zumindest zwei Meßrichtungen, wobei die Meßergebnisse zur Berechnung der Volumengröße verwertbar sind,
dadurch gekennzeichnet,
daß außerhalb eines Fördermediums (1) in einer Meßentfernung (9) berührungslos arbeitende Abstandssensoren (S1,S2; S3) angeordnet sind, daß deren Meßstrahl (8) quer zur Förderrichtung (7) über der Fördermediumebene (5) entsprechend dem niedrigsten Fördergut (2) ausgerichtet ist und daß ein etwa vertikal verlaufender Meßstrahl (8) entweder etwa mittig zum Fördermedium (1) oder aber nahe zu einer Fördererbegrenzung (3) verlaufend ausgerichtet ist.

8. Einrichtung nach Anspruch 7,
dadurch gekennzeichnet,
daß die Abstandssensoren (S1, S2, S3) aus optischen Sensoren oder aus Ultraschallsensoren gebildet sind.

9. Einrichtung nach einem der Ansprüche 7 oder 8,
dadurch gekennzeichnet,
daß die optischen Abstandssensoren (S1,S2,S3) mit Schaltungen nach dem Prinzip der Triangulation, der Lichtstreuung, der Phasenverschiebung oder einem Laufzeitverfahren eingesetzt sind.

10. Einrichtung nach einem der Ansprüche 7 bis 9,
dadurch gekennzeichnet,
daß die Abstandssensoren (S1, S2, S3) mit Schaltungen nach dem Prinzip des Echolots oder des Sonars ausgeführt sind.

Fig.2A

Fig.2B

Fig.1A

Fig.1B

# Fig.3A

# Fig.3B

# Fig.4

## Signale S1, S2, S3

EP 0 726 445 A2

# Fig.5

## Signale S1, S2, S3

EP 0 726 445 A2